**Europäisches Patentamt**

**European Patent Office**

**Office européen des brevets**

(19)

(11) Veröffentlichungsnummer : **0 477 413 B1**

(12) **EUROPÄISCHE PATENTSCHRIFT**

(45) Veröffentlichungstag der Patentschrift :
**09.08.95 Patentblatt 95/32**

(51) Int. Cl.⁶ : **G05D 3/18**

(21) Anmeldenummer : **90118610.6**

(22) Anmeldetag : **27.09.90**

(54) Verfahren zum Verringern von Hysterese und elektromechanischer Wandler mit Hysterese-Verringerung.

(43) Veröffentlichungstag der Anmeldung :
**01.04.92 Patentblatt 92/14**

(45) Bekanntmachung des Hinweises auf die Patenterteilung :
**09.08.95 Patentblatt 95/32**

(84) Benannte Vertragsstaaten :
**DE FR GB IT**

(56) Entgegenhaltungen :
**DE-A- 1 414 722**
**DE-A- 3 137 419**
**GB-A- 2 059 111**

(73) Patentinhaber : **SIEMENS AKTIENGESELLSCHAFT**
**Wittelsbacherplatz 2**
**D-80333 München (DE)**

(72) Erfinder : **Graf, Friedrich, Dipl.-Ing. (FH)**
**Amselweg 5**
**D-8400 Regensburg (DE)**
Erfinder : **Ulm, Michael, Dr.-Ing.**
**Dahlienweg 24**
**D-8401 Alteglofsheim (DE)**
Erfinder : **Stärker, Klaus, Dr.-Ing.**
**Am Weiheracker 18**
**D-8402 Neutraubling (DE)**

EP 0 477 413 B1

## Beschreibung

Die Erfindung betrifft ein Verfahren nach dem Oberbegriff von Anspruch 1 und einen elektromechanischen Wandler nach dem Oberbegriff von Anspruch 5.

Ziel eines solchen Wandlers ist das eindeutige Umsetzen eines elektrischen Stromes als Eingangssignal in eine zugeordnete mechanische Größe, die z.B. ein Öldruck, ein Weg oder eine Kraft sein kann. Der Wandler ist mit Hysterese behaftet, d.h. im Fall einer quasistatischen Bewegung ist eine eindeutige Zuordnung zwischen dem Strom und der mechanischen Größe nicht möglich. Um die unerwünschten Auswirkungen der Hysterese zu vermeiden ist es bekannt, für eine Nennbetriebstemperatur die Hysterese der mechanischen Größe oder die zugeordnete Stromhysterese durch Versuch zu bestimmen und als konstantes Korrektursignal dem Sollstrom richtungsabhängig aufzuschalten (Fortschrittberichte VDI, Reihe 8 Nr. 174, 1989, Seite 81 bis 83). Nachteilig ist dabei, daß der Temperatureinfluß und die Streuungen der elektromagnetischen Eigenschaften der einzelnen Stellglieder nicht berücksichtigt werden können.

Bekannt ist es auch, die Arbeitspunkte des Wandlers jeweils nur auf einer der beiden Hystereselinien einzustellen, indem bei Veränderung der elektrischen Stellgröße gegen die Hysterierichtung ein zusätzliches elektrisches Signal in diese Richtung für eine festgelegte Zeit hinzugefügt und danach wieder weggenommen wird. Das zusätzliche Signal soll größer als der größte Hystereseabstand sein (EP-A2 0 137 324).

Bekannt ist außerdem, zur Verringerung der Hysterese dem Strom ein periodisches Signal zu überlagern, das zu einer quasistatischen Abhängigkeit der mechanischen Größe von dem Strom führt.

Das periodische Signal muß dabei so gestaltet sein, daß einerseits die gewünschte Hystereseverminderung erzielt wird, daß aber andererseits durch das periodische Signal keine zu starke Störung des zeitlichen Verlaufs der mechanischen Größe eintritt. (Ölhydraulik und Pneumatik 25 (1981) Nr. 5, Seiten 403 bis 407). Dazu wird entweder mit einer Periodizität des Stromverlaufs, die durch eine Pulsweitenmodulierung im Stromregler indirekt erzielt wird, die Hysterese vermindert, oder ein Schwankungsanteil mit fester Frequenz und fester Amplitude dem Spulenstrom überlagert. Beide Wege haben den Nachteil, daß eine Abhängigkeit der Hysterese von den Betriebsparametern des Stellglieds, z.B. der Temperatur, nicht berücksichtigt wird. Dadurch entsteht die Gefahr, daß ein fehlangepaßtes Überlagerungssignal benutzt wird, das entweder eine zu große Störung der mechanischen Größe oder eine zu kleine Verminderung der Hysterese bewirkt. Die indirekt erzielte Periodizität des Stroms hat außerdem den Nachteil, daß die Amplitude des Schwankungsanteils auf dem Spulenstrom von dem Puls-Pause-Verhältnis der Pulsweitenmodulation und damit letztlich von dem Sollstrom abhängt.

Bei einem Proportionalventil für Druckflüssigkeiten mit einer elektrischen Steuerung eines geregelten magnetischen Antriebs für einen Ventilkörper wird dem Steuersignal für den elektromagnetischen Antrieb ein Zittersignal überlagert, das die Hysterese des Ventils verringert (DE-A 31 37 419). Um ein Durchschlagen der Zitterbewegung auf nachgeschaltete Stufen zu verhindern, wird die Amplitude des Zittersignals durch Rückführen des Ausgangssignals eines Wegsensors derart begrenzt, daß die Reibungskräfte nur geringfügig überwunden werden. Damit sollen Schwankungen der Reibungskräfte aufgrund von Exemplarstreuungen, Verschleiß und Umwelteinflüssen kompensiert werden. Eine Optimierung des Zittersignals in Abhängigkeit von der Temperatur des Ventilkörperantriebs oder in Abhängigkeit von dem Sollwert des Stromes ist nicht vorgesehen.

Bekannt ist auch ein Verfahren zum Erhöhen der Linearität eines Servoantriebs, insbesondere eines Richtantriebs für ein Geschütz, zum Anvisieren von beweglichen Zielen (GB-A 2 059 111). Die Frequenz dieses Zittersignals liegt unter, etwa bei oder wenig oberhalb der oberen Grenzfrequenz des Servoantriebs. Sie beträgt z.B. 8 Hz. Eine zugehörige Signalverarbeitungsschaltung weist ein oder mehrere Filter zweiter Ordnung auf. Eine Änderung der Zitterfrequenz oder -amplitude ist ebenfalls nicht vorgesehen.

Ein elektromagnetisch angetriebenes Hydraulikventil soll durch eine Gleichstromspannung genau auf jeden Druckwert eingestellt werden (DE-A 14 14 722). Der Gleichspannung werden gesteuerte Schwingungen überlagert, die die Hysteresewirkung des Elektromagneten merklich verringern. Die überlagerten Schwingungen werden weder in ihrer Frequenz noch in ihrer Amplitude in Abhängigkeit von einem Betriebsparameter verändert.

Der Erfindung liegt die Aufgabe zugrunde, den Einfluß der Betriebsparameter des Stellglieds bei der Hysteresekompensation zu berücksichtigen.

Diese Aufgabe wird erfindungsgemäß durch das Verfahren nach Anspruch 1 oder 2 und durch den elektromagnetischen Wandler nach Anspruch 5 oder 6 gelöst. Vorteilhafte Weiterbildungen der Erfindung ergeben sich aus den Unteransprüchen.

Ausführungsbeispiele der Erfindung werden im folgenden anhand der Zeichnung erläutert. Es zeigen:

Figur 1        das Strukturbild eines elektromagnetischen Wandlers mit Stromregelung,

Figur 2        einen erfindungsgemäßen geregelten elektromagnetischen Wandler,

Figur 3        einen zweiten erfindungsgemäßen elektromagnetischen Wandler, und

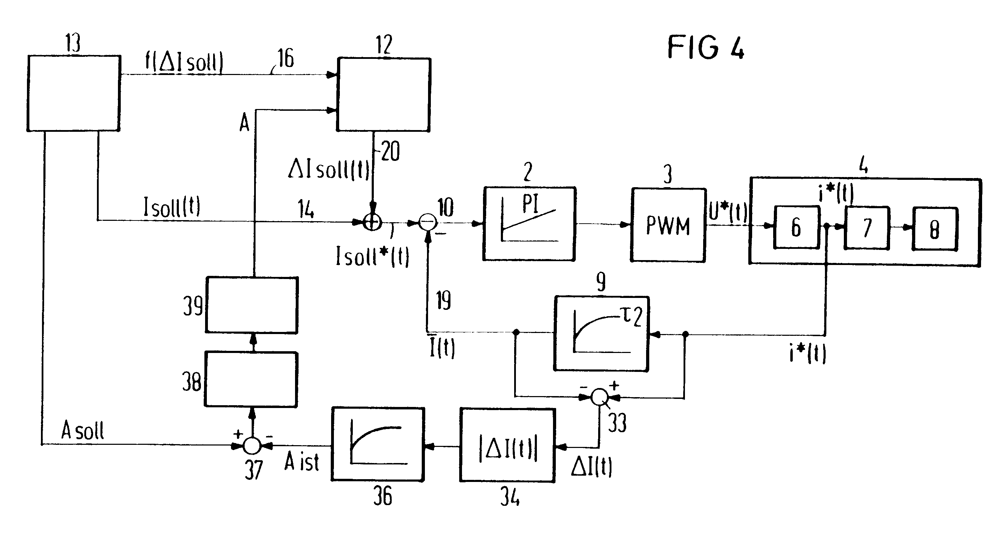

Figur 4        einen dritten erfindungsgemäßen elektromagnetischen Wandler.

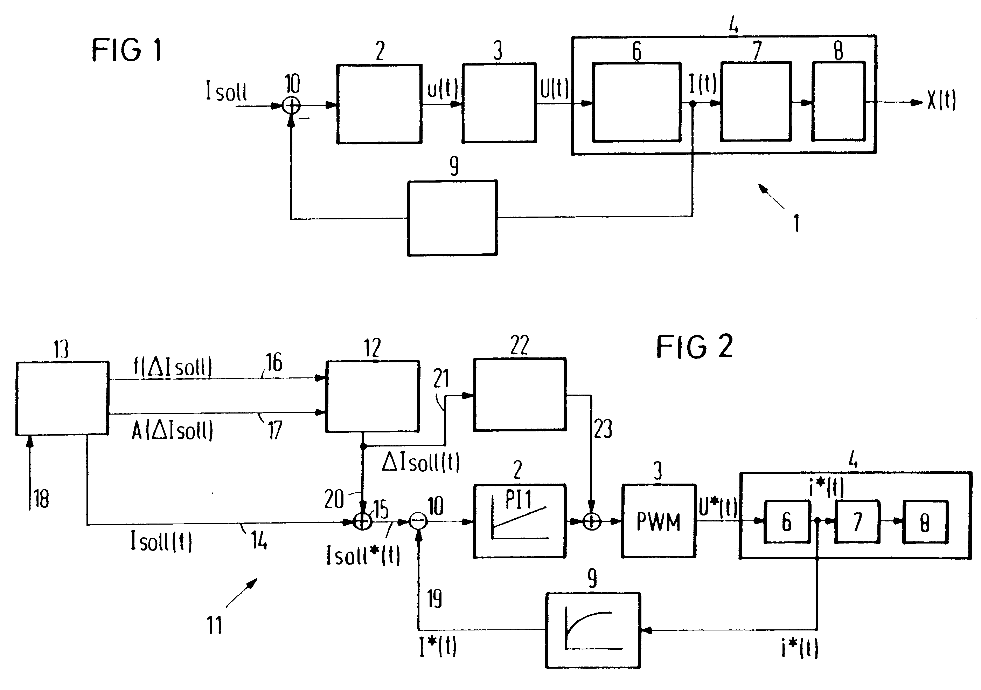

Ein elektromagnetischer Wandler 1 (Figur 1) bildet einen Regelkreis, dessen Führungsgröße oder Eingangssignal ein Sollstrom $I_{soll}$ ist, der einem Stromregler 2 zugeführt wird. Der Stromregler liefert eine Spannung u(t) an einen Pulsweiten- oder Pulsbreitenmodulator 3, der seinerseits ein pulsmoduliertes Spannungs-Signal U(t) an den Eingang eines Stellglieds 4 legt.

Das Stellglied 4 besteht aus einem elektrischen Teilsystem 6, einem Strom-Kraft-Wandler in Form eines Elektromagneten 7 und ggf. aus einem elektromagnetischen Teilsystem 8, welches die Kraft in eine gewünschte mechanische Ausgangs-Größe X(t) umwandelt.

Die mechanische Größe X(t) wird nicht direkt gemessen, es wird vielmehr der sich in dem elektrischen Teilsystem 6 einstellende Strom I(t) in einer Strommeßeinrichtung 9 gemessen und entsprechend geregelt. Dazu gelangt der Strom-Istwert als Regelgröße zu einem Subtraktionsglied 10 und wird dort mit dem Sollstrom $I_{soll}$ verglichen. Die Regeldifferenz wird in dem Stromregler 2 zur Regelung benutzt und über den Pulsbreitenmodulator 3 dem elektrischen Teilsystem 6 aufgeschaltet.

Ein elektromagnetischer Wandler 11 (Figur 2) weist neben den anhand von Figur 1 erläuterten und mit den gleichen Bezugszeichen versehenen Bestandteilen zusätzlich folgende Schaltungsteile auf: eine Signalquelle 12, die ein periodisches Signal erzeugt und die von einer Steuerschaltung 13 gesteuert wird. Die Steuerschaltung 13 gibt über eine Leitung 14 den Sollstrom $I_{soll}$(t) an ein Addierglied 15 und über Leitungen 16 und 17 die Frequenz f bzw. die Amplitude A des periodischen Signals an die Signalquelle 12. Über eine Leitung 18 erhält die Steuerschaltung 13 die aktuellen Werte eines Betriebsparameters des Stellglieds 4, z.B. dessen Temperatur, anhand dessen sie die Frequenz f und die Amplitude A des periodischen Signals frei vorgebbar festlegt.

Die Strommeßeinrichtung 9 ist als Verzögerungsglied 1. Ordnung ausgebildet, um den durch den Pulsbreitenmodulator verursachten Schwankungsanteil Di(t) in i*(t) zu unterdrücken (Zeitkonstante $\tau$ 1).

Das in der Signalquelle 12 erzeugte periodische Signal wird über eine Leitung 20 auf das Addierglied 15 gegeben und dort als Schwankungsanteil $DI_{soll}$(t) dem Sollstrom überlagert. (Der Buchstabe D wird hier aus drucktechnischen Gründen anstelle des griechischen Delta verwendet.) Der Schwankungsanteil kann irgendeinen periodischen Zeitverlauf aufweisen, z.B. sinusförmig oder rechteckförmig sein.

Das Schwankungsanteil wird zum Stromsollwert addiert und ergibt einen veränderten Sollwert

$$I^*_{soll}(t) = I_{soll}(t) + DI_{soll}(t),$$

der als neuer Sollwert für die Stromregelung benutzt wird. Auf diese Art weist der aktuelle Strom I*(t) im elektrischen Teilsystem 6 des Stellglieds 4 einen in der Frequenz und in der Amplitude verstellbaren Schwankungsanteil DI(t) auf (Di(t) sei vernachlässigt):

$$I^*(t) = \bar{I}(t) + DI(t),$$

wobei $\bar{I}$(t) einen gemittelten Iststrom darstellt.

In dem Addierglied 15 wird die Regeldifferenz aus dem Sollstrom auf der Leitung 14 mit überlagertem Schwankungsanteil auf der Leitung 20 und dem veränderten Sollstrom auf einer Leitung 19 gebildet.

Wesentlich ist, daß die Steuerschaltung 13 die Parameter Frequenz f und Amplitude A des Schwankungsanteils DI(t) in Abhängigkeit von mindestens einem Betriebsparameter des Stellglieds 4 so wählt, daß für alle Betriebsbereiche des Stellglieds ein Schwankungsanteil des Stroms benutzt wird, der so optimiert ist, daß einerseits die mechanische Größe X die geringstmögliche Hysterese aufweist und andererseits die auf die mechanische Größe X einwirkende Störung möglichst gering ist. Als Eingangs- oder unabhängiger Parameter für die Steuerschaltung 13 kann neben der Temperatur des Stellglieds 4 auch der Sollstrom $I_{soll}$(t) verwendet werden.

Durch das Einleiten des Schwankungsanteiles $DI_{soll}$(t) in den Sollwert des Stromregelkreises werden laufend Regelvorgänge hervorgerufen, die zu einer Ungenauigkeit hinsichtlich des sich einstellenden Strommittelwertes $\bar{I}$(t) und des mittleren Sollstroms $I_{soll}$(t) führen können. Diese mögliche quasistatische Ungenauigkeit wird durch eine zusätzlich gewichtete Aufschaltung des Schwankungsanteils $DI_{soll}$(t) auf das Ausgangssignal des Stromreglers 2 verringert. Der Schwankungsanteil $DI_{soll}$(t) wird über eine Leitung 21 auf eine Wichtungsschaltung 22 gegeben und dort mit einem Faktor gewichtet. Die Wichtung ist derart, daß der über eine Leitung 23 auf den Ausgang des Stromreglers 2 aufgeschaltete Anteil den größten Anteil des Stellglied-Stromes liefert, während der Stromregler 2 den kleineren Anteil liefert und sozusagen nur Feinregelung durchführt.

Die gewichtete Aufschaltung ist variabel: Sie kann vom Sollstrom abhängig gemacht werden, wobei ein höherer Sollstrom zu einem höheren Wichtungsfaktor führt und sie kann auch von der Temperatur abhängen, wobei der Wichtungsfaktor bei höherer Temperatur klein und bei niedriger Temperatur groß gewählt wird. Dies berücksichtigt die bei niedriger Temperatur größere Zähigkeit des Hydrauliköls und damit größere Hysterese, im Falle daß die zu regelnde mechanische Größe ein Hydraulikdruck ist. Die Frequenz des auf den Spulen-

EP 0 477 413 B1

strom aufgeprägten Schwankungssignals kann z.B. 50 Hz betragen, sie ist klein gegenüber der Abtastfrequenz des Pulsbreitenmodulators 3, die etwa bei 1 kHz liegen kann.

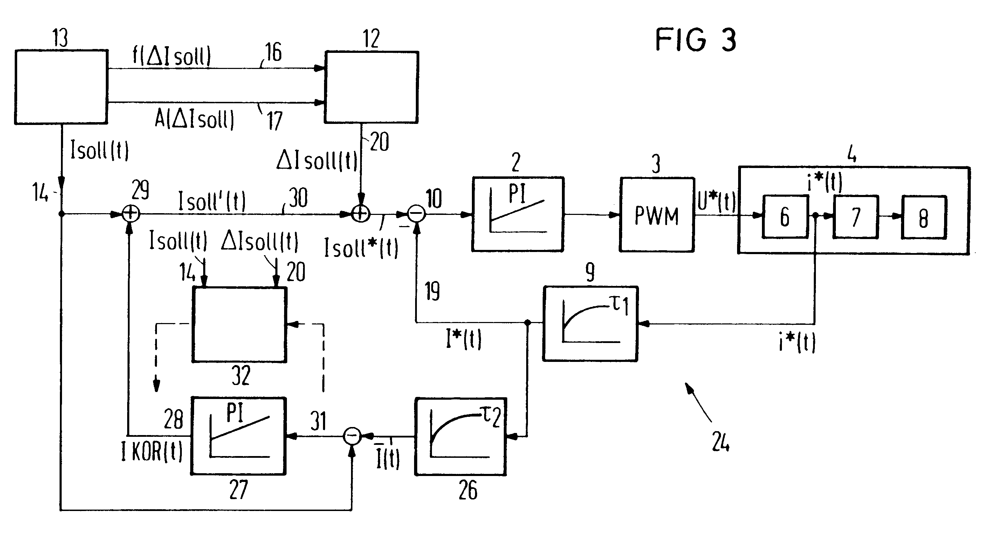

Bei einem weiteren elektromagnetischen Wandler 24 (Figur 3) ist der Ausgang der Strommeßeinrichtung 9 auch mit einem Verzögerungsglied erster Ordnung 26 - auch als $PT_1$-Glied bekannt - verbunden, bei dem die Zeitkonstante T2 >> T1 ist. Die Zeitkonstante T2 ist dabei so bemessen, daß die Varianz DI(t) des Stromes I*(t) nicht auf dem Signal am Ausgang des Verzögerungsglieds erscheint, sondern der gemittelte Wert $\bar{I}$(t). Dieser bildet mit dem Sollstrom $I_{soll}$(t) eine Regeldifferenz, die einem weiteren Regler 27, der als PI-Regler ausgebildet ist, zugeführt wird. Der Regler 27 erzeugt einen Korrekturstrom $I_{kor}$(t), der über eine Leitung 28 zu einem Addierglied 29 gelangt und dort dem Sollstrom hinzugefügt wird und einen geänderten Sollstrom $I_{soll}'$(t) ergibt, der über eine Leitung 30 dem bereits beschriebenen ersten Regelkreis als Sollwert eingegeben wird.

Anstelle des PI-Reglers 27 kann auch eine Adaptionsschaltung 32 eingesetzt werden - in der Zeichnung mit gestrichelten Linien angedeutet -, die aus der auf einer Leitung 31 anliegenden Regeldifferenz einen Korrekturwert bildet, der in Abhängigkeit von dem Stromsollwert $I_{soll}$(t) - auf Leitung 14 - und der Amplitude des Schwankungsanteils $DI_{soll}$(t) - auf Leitung 20 - in einem Speicher in Form eines Korrektur-Kennfelds abgelegt wird. Damit steht dann immer ein angepaßter Korrekturstrom $I_{kor}$(t) zur Verfügung, auch wenn das Signal auf der Leitung 31 noch nicht eingeschwungen ist. Zu diesem Zweck wird das Signal auf der Leitung 14 ausgewertet.

Auch bei dem elektromagnetischen Wandler 24 kann - obwohl in der Zeichnung nicht dargestellt - der Schwankungsanteil mit der anhand von Figur 2 beschriebenen Wichtungsschaltung 22 auf den Stromsollwert aufgeschaltet werden. Auch hier ergibt sich dann eine höhere Einstellgenauigkeit des Stromes $\bar{I}$(t).

Die vorstehend beschriebenen Maßnahmen ermöglichen eine exakte Einstellung des gemittelten Ist-Stromes $\bar{I}$(t) hinsichtlich des geforderten mittleren Sollstromes $I_{soll}$(t). Abweichungen zwischen dem veränderten Sollstrom $I*_{soll}$(t) und dem Iststrom I*(t), die durch die dauernden Regelvorgänge bedingt sind, führen aber auch zu Abweichungen des Ist-Schwankungsanteils DI(t) gegenüber dem Soll-Schwankungsanteil $DI_{soll}$(t). Je nach der jeweiligen Anwendung des Wandlers können diese Abweichungen der Schwankungsanteile toleriert oder müssen kompensiert werden. Ist eine Kompensation nötig, so kann sie dadurch erfolgen, daß in einer zu der überlagerten Mittelwertregelung analogen Weise auch der Schwankungsanteil durch einen überlagerten Regler geregelt wird. Die Amplitude des Schwankungsanteils DI(t) wird dabei wie folgt geregelt: es wird in einem Subtrahierglied 33 die Differenz zwischen dem Eingangs- und dem Ausgangssignal der Strommeßeinrichtung 9 (PT1-Glied mit Zeitkonstante $\tau$2) gebildet und von dem Differenzsignal DI(t) in einem Gleichrichter 34 der Betrag gebildet und danach in einer Siebschaltung 36 geglättet. Das Ergebnis ist eine Ist-Amplitude A von dem Schwankungsanteil DI(t). Die Differenz zwischen der von der Steuerschaltung 13 gelieferten Soll-Amplitude $A_{soll}$ des Stroms und der Ist-Amplitude $A_{ist}$ wird einem Regler 38 zugeführt. Das Reglerausgangssignal wird in einem begrenzenden Integrator 39, der es zwischen 0 und einem Maximalwert $A_{max}$ begrenzt, integriert und damit ein Signal A erzeugt, das an die Signalquelle 12 als einzustellende Schwankungsamplitude geliefert wird.

## Patentansprüche

1. Verfahren zum Verringern der Hysterese eines lagegeregelten elektromechanischen Stellgliedes, bei welchem dem Strom, der das Eingangssignal des Stellgliedes darstellt, ein periodischer Schwankungsanteil überlagert wird, der von einer physikalischen Größe des Stellgliedes beeinflußt wird, **dadurch gekennzeichnet, daß** die Frequenz oder die Amplitude des periodischen Schwankungsanteils in Abhängigkeit von der Temperatur des Stellgliedes derart optimiert werden, daß durch Temperaturänderungen verursachte Fehler der Hysteresekompensation möglichst gering werden.

2. Verfahren zum Verringern der Hysterese eines lagegeregelten elektromechanischen Stellgliedes, bei welchem dem Strom, der das Eingangssignal des Stellgliedes darstellt, ein periodischer Schwankungsanteil überlagert wird, der von einer physikalischen Größe des Stellgliedes beeinflußt wird, **dadurch gekennzeichnet, daß** die Frequenz oder die Amplitude des periodischen Schwankungsanteils in Abhängigkeit von dem Sollwert des Stromes, der einem Stromregelkreis als Führungsgröße zugeführt wird, derart optimiert werden, daß damit durch Sollwertänderungen verursachte Fehler der Hysteresekompensation möglichst gering werden.

3. Verfahren nach Anspruch 1 oder 2, dadurch gekennzeichnet, daß der Schwankungsanteil dem Ausgangssignal eines Stromreglers oder dem Sollwert des Stroms in veränderlich gewichteter Form aufgeschaltet wird.

<div align="center">4</div>

**4.** Verfahren nach Anspruch 3, dadurch gekennzeichnet, daß der Schwankungsanteil mit einem Wichtungsfaktor gewichtet wird, der von der Temperatur oder dem Sollwert des Stromes abhängt.

**5.** Elektromechanischer Wandler mit Hystereseverringerung, der aufweist: ein Stellglied (4), einen den Strom des Stellgliedes regelnden Regler (2) und eine Signalquelle (12), durch die dem Strom ein periodisches Schwankungssignal überlagert wird, das von einer physikalischen Größe des Stellgliedes (4) beeinflußt wird, **dadurch gekennzeichnet, daß** er eine mit der Signalquelle (12) verbundene Steuerschaltung (13) aufweist, durch die die Frequenz oder Amplitude des Schwankungsanteils in Abhängigkeit von der Temperatur des Stellgliedes (4) derart optimiert wird, daß durch Temperaturänderungen verursachte Fehler der Hysteresekompensation möglichst klein werden.

**6.** Elektromechanischer Wandler mit Hystereseverringerung, der aufweist: ein Stellglied (4), einen den Strom des Stellgliedes regelnden Regler (2) und eine Signalquelle (12), durch die dem Strom ein periodisches Schwankungssignal überlagert wird, das von einer physikalischen Größe des Stellgliedes (4) beeinflußt wird, **dadurch gekennzeichnet, daß** er eine mit der Signalquelle (12) verbundene Steuerschaltung (13) aufweist, durch die die Frequenz oder Amplitude des Schwankungsanteils in Abhängigkeit von dem Sollwert des Stromes, der einem Stromregelkreis als Führungsgröße zugeführt wird, derart optimiert werden, daß damit durch Sollwertänderungen verursachte Fehler der Hysteresekompensation möglichst gering werden.

**7.** Wandler nach Anspruch 5, dadurch gekennzeichnet, daß er einen zusätzlichen Regelkreis (26, 27,29) aufweist, durch den der Strommittelwert geregelt und dem Eingangsstrom überlagert wird.

**8.** Wandler nach Anspruch 7, dadurch gekennzeichnet, daß der zusätzliche Regelkreis (26, 29) eine Adaptionsschaltung (32) enthält, durch die aus der Regeldifferenz ein Korrekturwert ermittelt und in einem Speicher in Abhängigkeit von dem Sollwert des Stroms und der Sollamplitude des Schwankungssignals abgelegt wird.

**9.** Wandler nach Anspruch 7 oder 8, dadurch gekennzeichnet, daß er eine mit dem Ausgang der Signalquelle (12) verbundene Wichtungsschaltung (22) aufweist, in der das Schwankungssignal veränderlich gewichtet und dem Ausgangssignal des Reglers (2) überlagert wird.

**10.** Wandler nach Anspruch 5, dadurch gekennzeichnet, daß er einen weiteren Regelkreis (34 bis 39) enthält, durch den der Mittelwert der Amplitude des Schwankungssignals geregelt und als Regelgröße der Signalquelle (12) zugeführt wird.


**Claims**

**1.** Process for reducing hysteresis effects in a positionally controlled electromechanical actuator element, in which a periodic fluctuation component, which is influenced by a physical quantity of the actuator element, is superimposed on the current which represents the input signal of the actuator element, characterized in that the frequency or the amplitude of the periodic fluctuation component are optimized in dependence on the temperature of the actuator element in such a manner that errors in the hysteresis compensation, caused by temperature changes, become as low as possible.

**2.** Process for reducing hysteresis effects in a positionally controlled electromechanical actuator element, in which a periodic fluctuation component, which is influenced by a physical quantity of the actuator element, is superimposed on the current which represents the input signal of the actuator element, characterized in that the frequency or the amplitude of the periodic fluctuation component are optimized in dependence on the nominal value of the current, which is supplied as reference value to a current control loop, in such a manner that errors in the hysteresis compensation, caused by changes in the nominal value, thus become as low as possible.

**3.** Process according to Claim 1 or 2, characterized in that the fluctuation component is added in variably- weighted form to the output signal of a current controller or to the nominal value of the current.

**4.** Process according to Claim 3, characterized in that the fluctuation component is weighted with a weighting factor which is dependent on the temperature or on the nominal value of the current.

5. Electromechanical transducer in which hysteresis effects are reduced and which exhibits: an actuator element (4), a controller (2) controlling the current of the actuator element and a signal source (12), by means of which a periodic fluctuation signal, which is influenced by a physical quantity of the actuator element (4), is superimposed on the current, characterized in that this transducer exhibits a control circuit (13), connected to the signal source (12), by means of which the frequency or amplitude of the fluctuation component is optimized in dependence on the temperature of the actuator element (4), in such a manner that errors in the hysteresis compensation caused by temperature changes become as small as possible.

6. Electromechanical transducer in which hysteresis effects are reduced and which exhibits: an actuator element (4), a controller (2) controlling the current of the actuator element and a signal source (12), by means of which a periodic fluctuation signal, which is influenced by a physical quantity of the actuator element (4), is superimposed on the current, characterized in that this transducer exhibits a control circuit (13), connected to the signal source (12), by means of which the frequency or amplitude of the fluctuation component are optimized in dependence on the nominal value of the current, which is supplied as reference value to a current control loop, in such a manner that errors in the hysteresis compensation caused by changes in the nominal value thus become as low as possible.

7. Transducer according to Claim 5, characterized in that this transducer exhibits an additional control loop (26, 27, 29) by means of which the mean current value is controlled and superimposed on the output current.

8. Transducer according to Claim 7, characterized in that the additional control loop (26, 29) contains an adaptation circuit (32) by means of which a correction value is determined from the system deviation and is stored in a memory in dependence on the nominal value of the current and on the nominal amplitude of the fluctuation signal.

9. Transducer according to Claim 7 or 8, characterized in that this transducer exhibits a weighting circuit (22), connected to the output of the signal source (12), in which the fluctuation signal is variably weighted and superimposed on the output signal of the controller (2).

10. Transducer according to Claim 5, characterized in that this transducer contains a further control loop (34 to 39) by means of which the mean value of the amplitude of the fluctuation signal is controlled and is supplied as controlled variable to the signal source (12).

**Revendications**

1. Procédé pour réduire l'hystérésis d'un circuit de réglage électromécanique à régulation de position, selon lequel au courant qui représente le signal d'entrée du circuit de réglage, est superposée une composante de variation périodique, qui est influencée par une grandeur physique du circuit de réglage, caractérisé par le fait que la fréquence ou l'amplitude de la composante de variation périodique est optimisée en fonction de la température du circuit de réglage de telle sorte que les erreurs provoquées par des variations de température, de la compensation d'hystérésis deviennent aussi faibles que possible.

2. Procédé pour réduire l'hystérésis d'un circuit de réglage électromécanique à régulation de position, selon lequel une composante de variation périodique est superposée au courant qui représente le signal d'entrée du circuit de réglage, cette composante de variation périodique, étant influencée par une grandeur physique du circuit de réglage, caractérisé en ce que la fréquence ou l'amplitude de la composante de variation périodique est optimisée en fonction de la valeur de consigne du courant, qui est envoyée en tant que grandeur pilote à un circuit de réglage du courant, de telle sorte que les erreurs provoquées par des variations de la valeur de consigne, de la compensation d'hystérésis deviennent aussi faibles que possible.

3. Procédé selon la revendication 1 ou 2, caractérisé en ce que la composante de variation est superposée au signal de sortie d'un régulateur de courant ou à la valeur de consigne du courant sous une forme pondérée d'une manière variable.

4. Procédé selon la revendication 3, caractérisé en ce que la composante de variation est pondérée par un facteur de pondération dépendant de la température ou de la valeur de consigne du courant.

5. Convertisseur électromécanique à réduction d'hystérésis qui comporte : un circuit de réglage (4), un régulateur (2) qui règle le courant du circuit de réglage, et une source de signaux (12), au moyen de laquelle au courant est superposé un signal de variation périodique influencé par une grandeur physique du circuit de réglage (4), caractérisé en ce qu'il comporte un circuit de commande (13), relié à la source de signaux (12) et au moyen duquel la fréquence ou l'amplitude de la composante de variation est optimisée en fonction de la température du circuit de réglage (4) de telle sorte que les erreurs provoquées par des variations de température, de la compensation d'hystérésis deviennent aussi faibles que possible.

6. Convertisseur électromécanique à réduction d'hystérésis qui comporte : un circuit de réglage (4), un régulateur (2) qui règle le courant du circuit de réglage, et une source de signaux (12), au moyen de laquelle au courant est superposé un signal de variation périodique influencé par une grandeur physique du circuit de réglage (4), caractérisé en ce qu'il comporte un circuit de commande (13), relié à la source de signaux (12) et au moyen duquel la fréquence ou l'amplitude de la composante de variation est optimisée en fonction de la valeur de consigne du courant, envoyée en tant que grandeur pilote à un circuit de réglage du courant, de telle sorte que les erreurs provoquées par des variations de la valeur de consigne, de la compensation d'hystérésis deviennent aussi faibles que possible.

7. Convertisseur selon la revendication 5, caractérisé en ce qu'il comprend un circuit de réglage supplémentaire (26,27,29), grâce auquel la valeur moyenne du courant est réglée et est superposée au courant d'entrée.

8. Convertisseur selon la revendication 7, caractérisé en ce que le circuit de réglage supplémentaire (26,29) comprend un circuit d'adaptation (32), grâce auquel une valeur de correction est déterminée à partir de la différence de réglage et est mémorisée dans une mémoire en fonction de la valeur de consigne du courant et de l'amplitude de consigne du signal de variation.

9. Convertisseur selon la revendication 7 ou 8, caractérisé en ce qu'il comporte un circuit de pondération (22), relié à la sortie de la source de signaux (12) et dans lequel le signal de variation est pondéré d'une manière variable et est superposé au signal de sortie du régulateur (2).

10. Convertisseur selon la revendication 5, caractérisé en ce qu'il comprend un circuit de réglage supplémentaire (34 à 39), grâce auquel la valeur moyenne de l'amplitude du signal de variation est réglée et envoyée en tant que grandeur de réglage à la source de signaux (12).

EP 0 477 413 B1

FIG 1

Isoll

10

2

u(t)

3

U(t)

4

6

I(t)

7

8

X(t)

9

1

FIG 2

13

f(ΔIsoll)   16

12

21

22

23

A(ΔIsoll)   17

18

ΔIsoll(t)

2

PI1

3

PWM

U*(t)

4

i*(t)

6

7

8

20

15

Isoll(t)   14

Isoll*(t)

10

19

I*(t)

9

i*(t)

11

8

FIG 3

FIG 4